# EUROPEAN PATENT SPECIFICATION

(11) **EP 1 598 104 B1**
(45) Date of publication and mention of the grant of the patent: **28.09.2011**
(21) Application number: 05008199.1
(22) Date of filing: 14.04.2005
(51) Int. Cl.: B01D 53/94, B01J 23/63

(54) **Diesel particulate filter**
Diesel-Partikelfilter
filtre à particules de moteur diesel

(30) Priority: 19.05.2004 JP 2004149652
(43) Date of publication of application: 23.11.2005
(73) Proprietor: Mazda Motor Corporation, Aki-gun Hiroshima 735-8670 (JP)
(72) Inventor: Harada, Koichiro, Mazda Motor Corp., Aki-gun Hiroshima 735-8670 (JP); Tsushio, Yoshinori, Mazda Motor Corp., Aki-gun Hiroshima 735-8670 (JP); Takami, Akihide, Mazda Motor Corp., Aki-gun Hiroshima 735-8670 (JP); Iwakuni, Hideharu, Mazda Motor Corp., Aki-gun Hiroshima 735-8670 (JP); Yamada, Hiroshi, Mazda Motor Corp., Aki-gun Hiroshima 735-8670 (JP); Miyoshi, Seiji, Mazda Motor Corp., Aki-gun Hiroshima 735-8670 (JP)
(74) Representative: Herrmann, Uwe

(56) References cited:
- EP-A1- 0 525 677
- EP-A1- 1 020 216
- EP-B1- 1 533 031
- WO-A-00/29726
- US-A1- 2004 065 078
- PATENT ABSTRACTS OF JAPAN vol. 2003, no. 12, 5 December 2003 (2003-12-05) & JP 2004 058013 A (NISSAN MOTOR CO LTD), 26 February 2004 (2004-02-26)

## Description

### Technical Field

This invention relates to a diesel particulate filter disposed in an exhaust passage of a diesel engine to trap particulate matter in an exhaust gas discharged from the engine and burn it off thereby cleaning the filter.

### Background Art

When the amount of particulate matter deposited on a diesel particulate filter (hereinafter also referred to as "DPF") is increased to clog the filter, the back pressure of the diesel engine becomes high. As a result, the amount of combustion exhaust gas left in the engine cylinder is increased and the engine pumping work is also increased. This invites reduced engine output power and deteriorated fuel economy. Therefore, particulate matter on the filter must be removed by burning off it before the filter causes clogging. Though, in general, particulate matter on diesel particulate filters naturally ignites at approximately 600°C, the exhaust gas temperature at the filters in diesel engines in normal operation is much smaller than 600°C.

One solution to the above problem is disclosed in Japanese Unexamined Patent Publication No. 2003-334443. This publication proposes a technique that ceria-zirconia mixed oxide having oxygen storage capacity is applied to the wall surfaces of exhaust gas channels in a diesel particulate filter and a catalytic precious metal having oxidation catalytic activity is supported on the mixed oxide. This proposal is intended to generate active oxygen from the mixed oxide by its oxygen storage/release actions by normally operating the engine at a lean A/F ratio but intermittently changing the A/F ratio to the rich side and use the generated active oxygen to burn off particulate matter at temperatures lower than 600°C.

The proposed technique can also provide the effect of decreasing the burning start temperature for particulate matter, but has a limit to the effect. Furthermore, over the course of burning off particulate matter on the particulate filter, the filter temperature may rise up to approximately 1000°C. Such a temperature rise invites sintering of the catalytic precious metal supported on the mixed oxide, leading to deteriorated particulate burnability.

### Disclosure of the Invention

An object of the present invention is to prevent a catalytic precious metal in a diesel particulate filter from sintering, thereby maintaining the ability of the filter to burn off particulate matter for a long period of time.

Another object of the present invention is to decrease the burning start temperature of particulate matter on a diesel particulate filter.

To achieve the above objects, in the present invention, particles of a mixed oxide coated on a filer body are doped with a catalytic precious metal for burning off particulate matter.

More specifically, a first aspect of the present invention is directed to a diesel particulate filter comprising: a filter body disposed in an exhaust passage of a diesel engine to trap particulate matter in an exhaust gas discharged from the engine; and a washcoat layer which is formed on wall surfaces of exhaust gas channels in the filter body and contains a catalytic precious metal for burning off the particulate matter by oxidation and mixed oxide particles including Ce and Zr, and characterised in that the catalytic precious metal comprises at least either Rh atoms placed at and/or between crystal lattice points of each said mixed oxide particle and existing inside of and on the surface of the mixed oxide particle, or Pt atoms placed at and/or between crystal lattice points of each said mixed oxide particle and existing on the surface of the mixed oxide particle.

With this structure, since Rh atoms or Pt atoms are placed as a catalytic precious metal at and/or between crystal lattice points of each mixed oxide particle and dispersed in or on the mixed oxide particle, they are less likely to sinter when exposed to high temperatures.

Further, since the mixed oxide particles contain Ce, they act as OSC (Oxygen Storage Capacity) material for storing oxygen in an exhaust gas when the oxygen concentration of the exhaust gas is high and releasing it when the oxygen concentration thereof is lowered. In a filter structure in which Rh atoms are placed at and/or between crystal lattice points of each mixed oxide particle, the rate of oxygen storage is quickly raised and the peak rate and amount of oxygen storage are increased. Therefore, the amount of oxygen release when the oxygen concentration in an ambient atmosphere is lowered can also be increased.

The reason for this, although it is not clear, is believed to be that while oxygen contacting the mixed oxide particle is taken in the form of ions into oxygen defect sites inside of the mixed oxide particle, Rh atoms existing inside of the mixed oxide particle expedite the movement of oxygen ions from the mixed oxide surface to the inside or vice versa.

Thus, particulate matter in the exhaust gas adheres to the washcoat layer of the particulate filter so that low oxygen concentration sites are locally generated in the mixed oxide particle surface. Oxygen stored in the mixed oxide particle is released as active oxygen to the low oxygen concentration sites. In this manner, active oxygen is used for oxidation reaction of particulate matter with Rh atoms on the particle surface, or a large amount of oxygen is supplied quickly to the low oxygen concentration sites. As a result, the sites to which the active oxygen is supplied serve as "flashpoints". Their surroundings, however, run short of oxygen at this time.

When flashpoints generate so that their surroundings run short of oxygen, low-OSC mixed oxide particles might not lead to the start of substantial burning (continuous burning) of particulate matter because of a low amount of oxygen additionally supplied.

On the other hand, in such a case, mixed oxide particles in the above filter structure of the present invention can supply oxygen continuously and sufficiently to flashpoints because of their excellent OSC as described above and therefore easily lead to the start of substantial burning of particulate matter. That is, the mixed oxide particles can decrease the start temperature of substantial burning of particulate matter. Therefore, when the exhaust gas temperature is increased by the control of engine fuel injection in order to regenerate the filter (i.e., clean the filter by burning off particulate matter), the amount of fuel injected for this purpose can be reduced. When, alternatively, the filter temperature is increased by supplying unburned fuel to an oxidation catalyst or the like disposed upstream of the filter to burn it by oxidation for the same purpose, the amount of supply of unburned fuel can be reduced. Accordingly, the mixed oxide in the above filter structure is advantageous for reduction of filter regeneration time and improvement of fuel economy.

In another filter structure in which Pt atoms are placed at and/or between crystal lattice points of each mixed oxide particle, most of the Pt atoms exist on the particle surface. Therefore, when particulate matter adheres to the mixed oxide particle, active oxygen released from the inside of the particle is efficiently used for oxidation reaction of particulate matter with Pt atoms on the particle surface. As a result, the burning of particulate matter is facilitated, which means that the start temperature of substantial burning of particulate matter is lowered. Accordingly, like the first-mentioned mixed oxide containing Rh atoms, the mixed oxide in this filter structure is also advantageous for reduction of filter regeneration time and improvement of fuel economy.

A second aspect of the present invention is directed to a diesel particulate filter comprising: a filter body disposed in an exhaust passage of a diesel engine to trap particulate matter in an exhaust gas discharged from the engine; and a washcoat layer which is formed on wall surfaces of exhaust gas channels in the filter body and contains a catalytic precious metal for burning off the particulate matter by oxidation and mixed oxide particles including Ce and Zr, and characterised in that the catalytic precious metal comprises: Rh atoms placed at and/or between crystal lattice points of each said mixed oxide particle; and Pt atoms supported on the surface of each said mixed oxide particle at and/or between crystal lattice points of which the Rh atoms are placed.

In this aspect, since Rh atoms are placed at and/or between crystal lattice points of each mixed oxide particle like the first aspect of the present invention, they are prevented from sintering. Furthermore, the OSC of each mixed oxide particle can be enhanced by the action of Rh atoms, which is advantageous for reduction of the burning start temperature for particulate matter.

Furthermore, since Pt atoms are supported on the surface of each mixed oxide particle enhanced in OSC by Rh atoms, Pt atoms easily act as a catalyst for promoting burning reaction of particulate matter as compared with the case where Pt atoms are placed at and/or between crystal lattice points of the mixed oxide particle and exist on the surface of the mixed oxide particle. Therefore, active oxygen released from the inside of the particle is efficiently used for oxidation reaction of particulate matter with Pt atoms on the particle surface. As a result, the burning start temperature for particulate matter is lowered, which is advantageous for reduction of filter regeneration time and improvement of fuel economy.

When the filter is exposed to high temperatures, Pt atoms diffusively move on the surface of the mixed oxide particle. During the time, the Pt atoms are captured by Rh atoms placed at and/or between crystal lattice points of the mixed oxide particle. As a result, further diffusive movement of the Pt atoms can be prevented and therefore sintering of the Pt atoms can be suppressed.

### Brief Description of Drawings

Figure **1** is a front view of a DPF.
Figure **2** is a longitudinal sectional view of the DPF.
Figure **3** is an enlarged sectional view of a partition that separates the DPF into an exhaust gas inflow channel and an exhaust gas outflow channel.
Figure **4** is a partly sectional perspective view schematically showing a mixed oxide particle according to an embodiment of the present invention.
Figure **5** is a partly sectional perspective view schematically showing a mixed oxide particle according to another embodiment of the present invention.
Figure **6** is a graph showing the DTA (Differential Thermal Analysis) peak temperatures in inventive and comparative examples.
Figure **7** is a graph showing XRD (X-ray Diffractometry) analysis results of Ce-Zr-Nd oxides in a Rh-doped mixed oxide and a Rh-post-supported mixed oxide which were measured in terms of x-ray diffraction peak intensity.
Figure **8A** shows a TEM photograph of a particle surface of a Rh-doped mixed oxide after heat-aging, and Figure **8B** shows a TEM photograph of a particle surface of a Rh-post-supported mixed oxide after heat-aging.
Figure **9** is a graph showing XRD analysis results of Pt in various kinds of mixed oxides which were measured in terms of x-ray diffraction peak intensity.
Figure **10** shows a STEM photograph of a particle of a mixed oxide according to an example of the present invention after heat-aging.
Figure **11** is a schematic diagram showing a measurement device for measuring the rate of oxygen storage.
Figure **12** is a time chart showing how the measurement device generates O₂ pulses and CO pulses.
Figure **13** is a graph showing the changes with time of the signal intensity of mass number 32 measured by a mass spectrometer in the measurement device.
Figure **14** is a graph showing the changes with time of the rates of oxygen storage of a sample according to an embodiment of the present invention and a sample according to the prior art.
Figure **15A** schematically shows the oxygen storage mechanism of a Rh-doped mixed oxide according to the embodiment of the present invention, and Figure **15B** schematically shows the oxygen storage mechanism of a Rh-supported mixed oxide according to the prior art.

### Best Mode for Carrying Out the Invention

Hereinafter, an embodiment of the present invention will be described in detail with reference to the drawings.

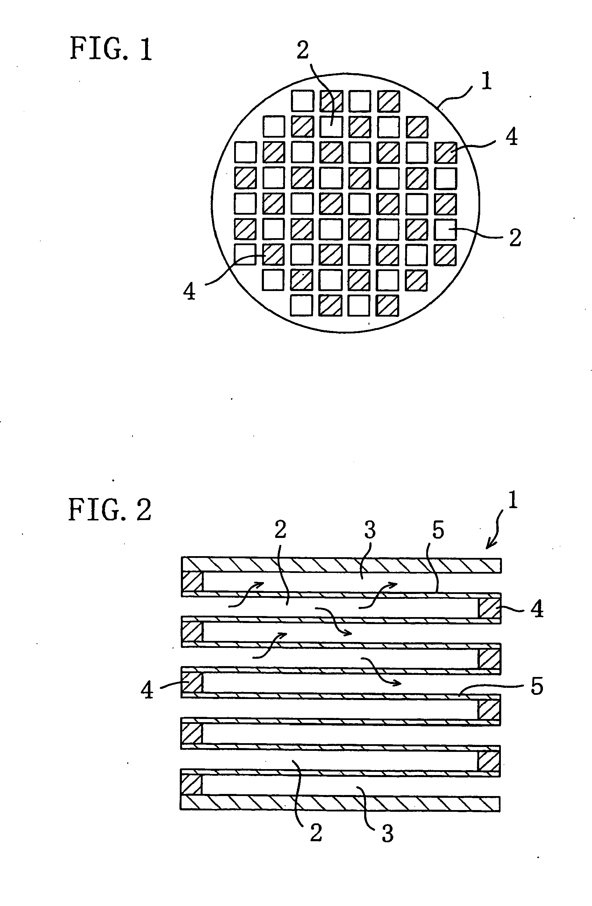

As schematically shown in Figures **1** and **2****,** a diesel particulate filter (hereinafter referred to as DPF) **1** has a honeycomb structure and includes multiple exhaust gas channels **2, 3** extending parallel to one another. More particularly, in the DPF **1,** exhaust gas inflow channels **2** closed at their downstream ends by plugs **4** and exhaust gas outflow channels **3** closed at their upstream ends by plugs **4** are arranged alternately up and down and to the right and left, and the adjacent exhaust gas inflow channel **2** and outflow channel **3** are separated by a thin partition **5.** In Figure **1****,** the hatched parts represent the plugs **4** located at the downstream end of the DPF **1.** The DPF **1** is disposed in an exhaust passage of a diesel engine. An oxidation catalyst may be disposed in the exhaust passage upstream of the DPF **1**.

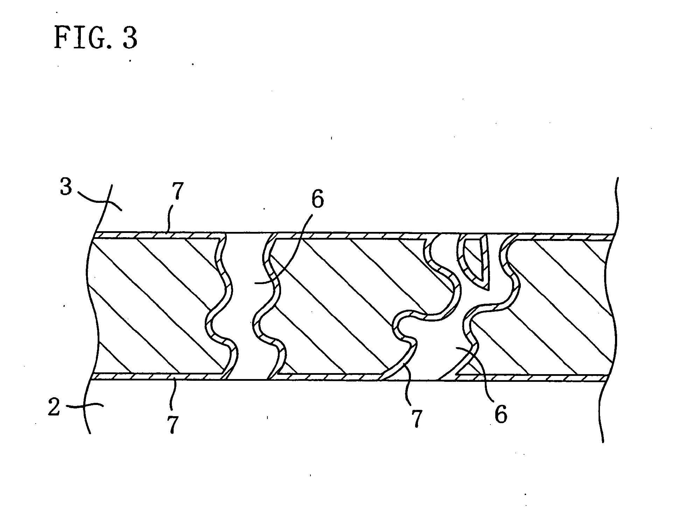

The filter body of the DPF **1** is made of porous material such as cordierite, and therefore exhaust gas having flowed into the exhaust gas inflow channel **2** flows out through the surrounding partitions **5** into the adjacent exhaust gas outflow channels **3** as shown in the arrows in Figure **2****.** That is, as shown in Figure **3****,** each partition **5** has micropores (fine exhaust gas channels) **6** that communicate the exhaust gas inflow channel **2** with the adjacent exhaust gas outflow channel **3,** and exhaust gas passes through the micropores **6.**

A catalyst washcoat layer **7** is formed on the wall surfaces of all the exhaust gas channels (exhaust gas inflow channels **2** and outflow channels **3** and micropores **6**) in the filter body of the DPF **1**. The washcoat layer **7** is formed by preparing catalyst powders in each of which one or more kinds of catalytic precious metals are placed at and/or between crystal lattice points of particles of a mixed oxide, mixing them with water and a binder into a slurry, washcoating the filter body with the slurry and then calcining the slurry-washcoated filter body.

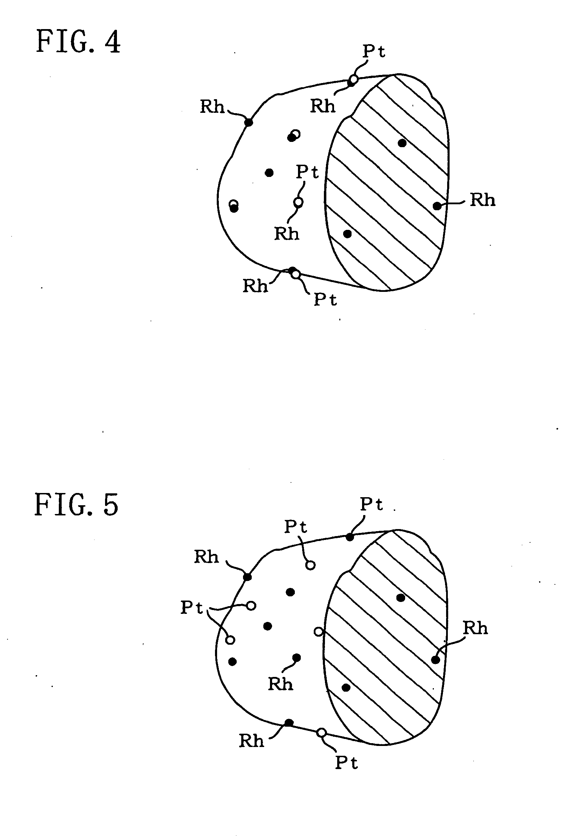

Figure **4** schematically shows a particle of the catalyst powder as above described. More specifically, the particle is obtained by doping a particle of Ce-Zr-Nd mixed oxide with Rh and Pt (in the figure, a Rh atom and a Pt atom are indicated by black and white circles, respectively). Note that "doping" means placing atoms of such a precious metal or metals at and/or between crystal lattice points of the mixed oxide particle. The Ce-Zr-Nd mixed oxide is a mixed oxide containing Ce, Zr and Nd.

As shown in Figure **4****,** Rh exists in doped form not only in the inside of each mixed oxide particle but also on the surface thereof. On the other hand, Pt exists in doped form on the surface of each mixed oxide particle but is not found in the inside thereof (actually, it is not clear whether or not Pt exists in the inside of the mixed oxide particle, but Pt in the inside of the Ce-Zr-Nd mixed oxide particle cannot be detected through the observation of x-ray diffraction peak intensity of the mixed oxide according to the below-mentioned XRD (X-ray Diffractometry) analysis. Furthermore, when the catalyst powders are heat-aged (for example, kept at around 1000°C for several hours to several ten hours), some of Pt atoms will be diffusively moved and captured by (or bound to) Rh atoms.

Instead of Ce-Zr-Nd mixed oxide, Ce-Zr mixed oxide containing no Nd may be employed as a mixed oxide in the present invention. Either one of Rh and Pt may be used as a dopant. Alternatively, in addition to at least one of Rh and Pt, any other kind or kinds of catalytic metals may be used as dopants.

Furthermore, a catalytic metal such as Pt may be supported by impregnation, evaporation to dryness or other processes on particles of the Rh- or Pt-doped mixed oxide. If K (potassium) is supported on particles of the Rh- or Pt-doped mixed oxide, this is advantageous in lowering the burning start temperature for exhaust gas particulate matter.

### Catalyst powder fabrication method

The catalyst powders as mentioned above can be fabricated according to the following process steps.

First, an acidic solution containing at least either of Rh and Pt, Ce and Zr is prepared (starting material preparation step). For example, this starting material can be prepared by mixing solutions of nitrate salts of the above metals. If necessary, any other kind or kinds of catalytic metals such as Nd may also be contained in the starting material.

The above starting material, i.e., the acidic solution, is mixed with an excessive amount of aqueous ammonia by quickly adding the aqueous ammonia to the solution while stirring the solution, so that all metals in the starting material are precipitated as metal hydroxide to obtain an amorphous precursor (step for preparing a mixed oxide precursor by ammonia coprecipitation). The liquid after coprecipitation is allowed to stand for a day and night, the supernatant liquid is removed therefrom to obtain a cake, and the cake is subjected to centrifugation and rinsed in water (precipitate separation step). The water-rinsed cake is dried by heating it at approximately 150°C (drying step). The dried cake is then calcined by heating (calcination step). This calcination may be implemented by keeping the cake in a normal atmosphere and, for example, at 400°C for five hours, and then keeping it at 500°C for two hours. The calcined material is further kept in a reduction atmosphere at approximately 500°C (reduction step).

In the above manner, a mixed oxide doped with the precious metal or metals is obtained.

### Experiment about particulate burning temperature

Different kinds of catalyst powders were prepared by doping one or two kinds of catalytic metals in a mixed oxide and additionally or alternatively post-supporting a catalytic metal on the mixed oxide, or without post-supporting, carbon black was mixed as particulate matter with the catalyst powders of each kind, and the mixture was examined for its exothermic peak temperature (particulate burning temperature) by DTA (Differential Thermal Analysis).

### - Preparation of catalyst powders -

### Example 1

Catalyst powders were prepared by doping mixed oxide particles with Rh alone as a catalytic precious metal by the above fabrication method (coprecipitation).

More specifically, respective predetermined amounts of zirconium oxynitrate solution, cerous nitrate solution, neodymium (III) nitrate hydrate solution and rhodium nitrate solution were mixed and stirred, with 300 mL of water added thereto, at room temperature for about an hour. The mixed solution was heated to 80°C and then mixed with 50 mL of 28% aqueous ammonia, which had been prepared in another beaker, by adding the aqueous ammonia at a stroke while strongly and quickly stirring the mixed solution with a glass rod. The addition and mixing of the aqueous ammonia were completed within one second. The cloudy solution resulting from the mixture of aqueous ammonia was allowed to stand for a day and night to produce a cake, and the cake was centrifuged and well rinsed in water. The water-rinsed cake was dried by heating it at approximately 150°C, and then calcined under the condition of keeping it at 400°C for five hours and then keeping it at 500°C for two hours.

Also if the mixed solution is heated to 80°C and then mixed with 50 mL of 28% aqueous ammonia by adding the aqueous ammonia at a drop rate of 0.42 mL/sec using a burette while strongly and quickly stirring the mixed solution with a glass rod (time from the start of addition to the end of mixing: two minutes), the resultant catalyst powders provide a cleaning performance approaching those resulting from the mixture obtained by completing the addition and mixing of the aqueous ammonia within one second. However, shorter periods of time of addition and mixing of the aqueous ammonia are preferable.

The mass percentage composition of resultant mixed oxide particles (catalyst particles) according to Example 1 was CeO₂ : ZrO₂ : Nd₂O₃ : Rh = 24.55 : 72.6 : 2.6 : 0.25. Therefore, the amount of catalytic precious metal in each mixed oxide particle is 0.25 mass %.

### Example 2

Catalyst powders of Example 2 were prepared in the same manner as in Example 1 but using two kinds of catalytic precious metals, Rh and Pt. More specifically, catalyst powders of Example 2 were obtained by doping mixed oxide particles with Rh and Pt as shown in Figure **4****.** A diamminedinitro platinum nitrate solution was used as a Pt source. The mass ratio of Rh to Pt was Rh/Pt = 3/1, and the total amount of catalytic precious metals (Rh and Pt) was 0.25 mass % like Example 1.

### Example 3

Catalyst powders of Example 3 (Rh- and Pt-doped mixed oxide particles) were prepared using two kinds of catalytic precious metals, Rh and Pt, in the same manner as in Example 2, but at a mass ratio of Rh/Pt = 1/3. The total amount of catalytic precious metals (Rh and Pt) was 0.25 mass % like Example 1.

### Example 4

Catalyst powders of Example 4 (Pt-doped mixed oxide particles) were prepared in the same manner as in Example 1 but using Pt alone as a catalytic precious metal. A diamminedinitro platinum nitrate solution was used as a Pt source. The amount of catalytic precious metal was 0.25 mass % like Example 1.

### Example 5

Catalyst powders of Example 5 were prepared by using two kinds of catalytic precious metals, Rh and Pt, doping mixed oxide particles with Rh alone and post-supporting Pt thereon. More particularly, mixed oxide particles doped with Rh alone were prepared in the same manner as in Example 1, impregnated with a diamminedinitro platinum nitrate solution and then subjected to drying and calcination. Figure **5** schematically shows a catalyst particle according to Example 5 (and also to Example 6 as described next). In Example 5, the mass ratio of Rh to Pt was Rh/Pt = 3/1 and the total amount of catalytic precious metals was 0.25 mass % like Example 1.

### Example 6

Catalyst powders of Example 6 (Rh-doped and Pt-post-supported mixed oxide particles) were prepared in the same manner as in Example 5 but at a mass ratio of Rh/Pt = 1/3. The amount of catalytic precious metal was 0.25 mass % like Example 1.

### Comparative Example

Catalyst powders of a comparative example were prepared by preparing mixed oxide particles in the same manner as in Example 1 but without doping them with any catalytic precious metal, and post-supporting Pt alone as a catalytic precious metal.

### - Thermal analysis (DTA) -

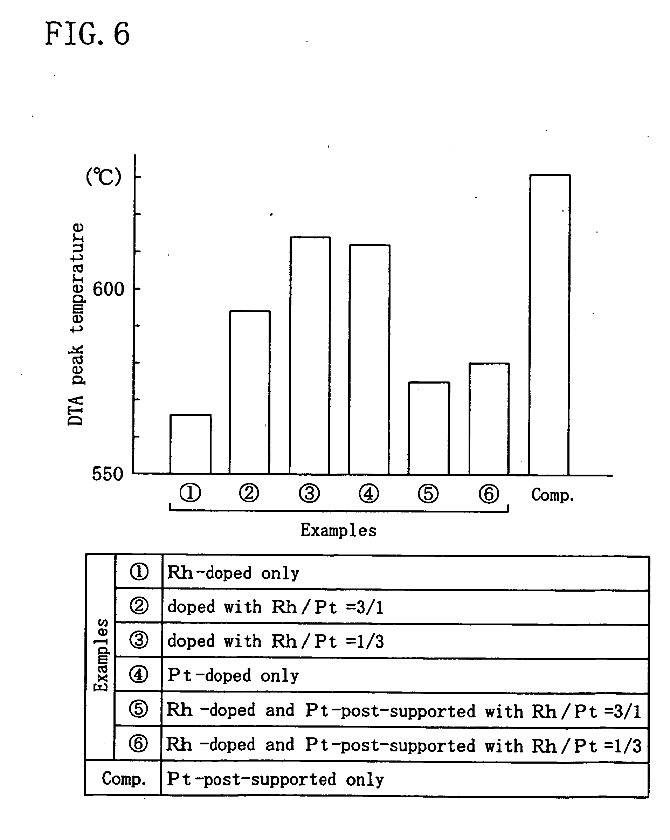

The catalyst powders of each of the above examples were prepared into DTA samples by heat aging them, i.e., keeping them in a normal atmosphere at a temperature of 900°C for 66 hours, and mixing them with carbon black. The amount of carbon black mixed was 20 mass % with respect to the mass of catalyst powders of each example. Each DTA sample was put into a reaction container and measured in terms of DTA peak temperature by raising the internal temperature of the container at a rate of 10°C/min while supplying simulated exhaust gas containing 10% oxygen and 250ppm NO₂ into the container. Figure **6** is a graph showing the measurement results.

Referring to Figure **6**, Example 4 and the comparative example are equal in that both of them contain Pt alone as a catalytic precious metal, but the former has a lower than the latter. It can be said, therefore, that when Pt is doped in mixed oxide particles, the burning start temperature of particulate matter is lower than when Pt is post-supported on the mixed oxide particles. This is probably because in Example 4 Pt sintering hardly occurs since Pt atoms are placed at and/or between crystal lattice points of the mixed oxide particles and Pt enhances the OSC of the mixed oxide particles.

The comparison between Example 1 and Example 4 shows that the former using Rh as a catalytic precious metal has a lower DTA peak temperature than the latter using Pt as a catalytic precious metal. This is probably because in Example 1 a large amount of Rh atoms are doped into the mixed oxide particles to enhance the OSC of the mixed oxide to a greater extent.

The comparison between Example 2 and Example 3 shows that the former having a larger amount of Rh has a lower DTA peak temperature than the latter. This is probably because in Example 2 a large amount of Rh atoms are doped into the mixed oxide particles to enhance the OSC of the mixed oxide.

The comparison between Examples 2 and 3 and Examples 5 and 6 shows that the latter in which Pt was post-supported on the mixed oxide particles has a lower DTA peak temperature than the former. The reason for this is believed as follows. In Examples 2 and 3, most of Pt atoms exist on the surface of each mixed oxide particle but are placed at and/or between crystal lattice points of the mixed oxide particle. Therefore, the amount of Pt atoms acting as a burning catalyst for particulate matter on the particle surface is smaller than in Examples 5 and 6 in which Pt is post-supported in the mixed oxide particle. In short, the surface area of Pt atoms acting as a catalyst is smaller.

Further, it might be said that post-supported Pt atoms in Examples 5 and 6 are likely to cause sintering as compared with doped Pt atoms in Examples 2 and 3. Also in Examples 5 and 6, however, Pt sintering is hard to cause since Rh is doped in the mixed oxide particle and Pt atoms are captured by Rh atoms. Therefore, the decrease in performance due to Pt sintering in Examples 5 and 6 is small.

### Structural analysis of mixed oxide particle surface

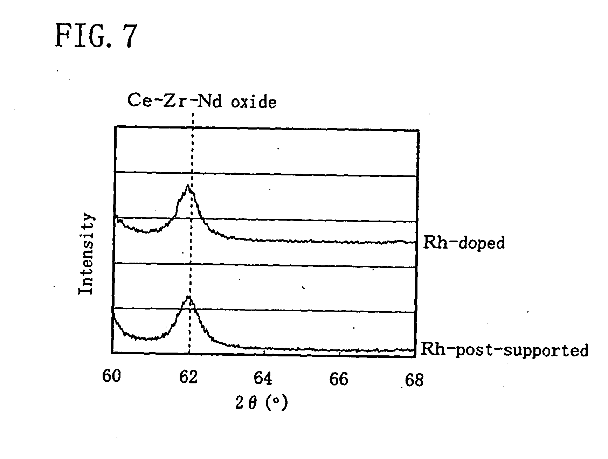

Rh-doped mixed oxide particles according to the above embodiment were prepared in the same manner as in Example 1 (wherein the amount of Rh doped was 0.486 mass %). Further, Rh-post-supported mixed oxide particles were also prepared by post-supporting Rh on mixed oxide particles prepared in the same manner as in Example 1 without doping a catalytic precious metal (wherein the amount of Rh post-supported was 0.486 mass %). These two kinds of mixed oxide particles were heat-aged by keeping them at a temperature of 1000°C in a normal atmosphere and then measured in terms of x-ray diffraction peak intensity of their respective Ce-Zr-Nd oxides by XRD (X-ray Diffractometry) analysis. The measurement results are shown in Figure 7.

As can be seen from the figure, the peak of Ce-Zr-Nd oxide in the Rh-doped mixed oxide particles shifts towards lower diffraction angles as compared with that in the Rh-post-supported mixed oxide particles. This shift towards lower diffraction angles is recognized to be the influence of Rh. Therefore, this results prove that Rh atoms exist at and/or between crystal lattice points of the Ce-Zr-Nd oxide, i.e., the Ce-Zr-Nd oxide is doped with Rh.

### State of Rh on mixed oxide particle surface

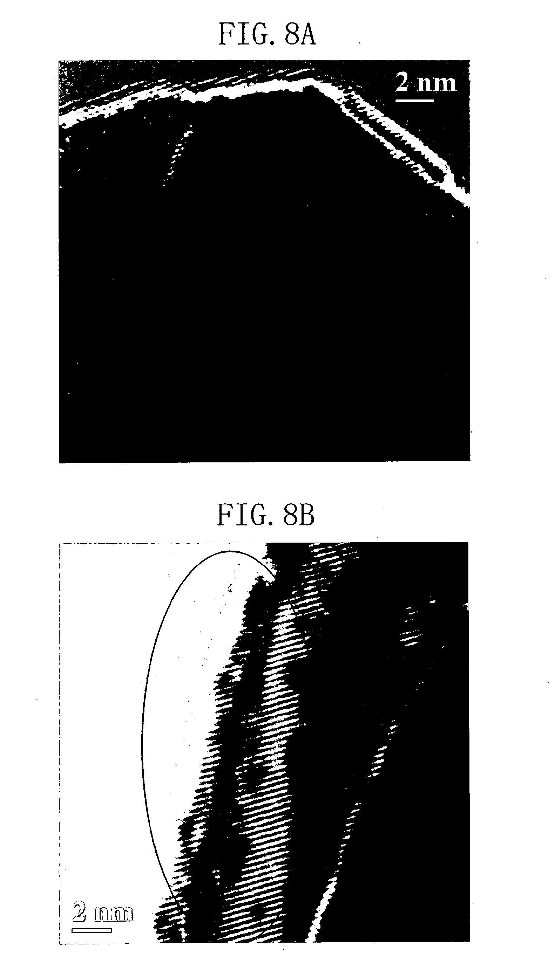

For the Rh-doped mixed oxide and the Rh-post-supported mixed oxide, their particle surfaces after heat-aging were observed using a TEM (Transmission Electron Microscope). The observation results are shown in Figure **8A** for the Rh-doped mixed oxide and Figure **8B** for the Rh-post-supported mixed oxide. In these figures, black parts in circles are Rh atoms. Though not clear, Rh atoms for the Rh-post-supported mixed oxide are dispersed in the form of relatively large aggregates while Rh atoms for the Rh-doped mixed oxide are dispersed in the form of small spots. These results also prove that Rh atoms in the mixed oxide of the above embodiment are placed at and/or between crystal lattice points of the Ce-Zr-Nd oxide and thus they are highly dispersed. Furthermore, it can be understood that for the Rh-doped mixed oxide, the diameter of Rh particles on the surface of the Ce-Zr-Nd oxide is equal to or smaller than 3nm. However, the diameter of Rh particles is preferably 1nm or less.

### State of Pt on mixed oxide particle surface

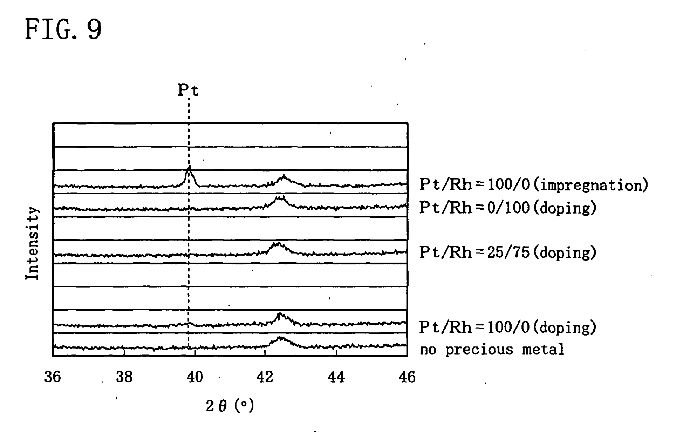

Figure **9** shows XRD (X-ray Diffractometry) analysis results of Pt in various kinds of precious metal-doped Ce-Zr-Nd mixed oxides of different Pt/Rh ratios prepared by doping, a Pt-post-supported Ce-Zr-Nd mixed oxide prepared by impregnation, and a Ce-Zr-Nd mixed oxide supported with no precious metal. These kinds of mixed oxides were heat-aged as described above and then measured in terms of x-ray diffraction peak intensity by XRD. In this figure, preparation methods employed for the above mixed oxide samples are noted in parentheses to the rights of the Pt/Rh ratios, respectively. For any one of the mixed oxides obtained by doping and the mixed oxide obtained by impregnation, the amount of precious metal is 0.25 mass %.

A comparison between the mixed oxide of Pt/Rh ratio = 100/0 (impregnation) and the mixed oxide of Pt/Rh ratio = 100/0 (doping) shows that the former clearly exhibits its peak x-ray diffraction intensity but the latter little exhibits its peak x-ray diffraction intensity. For the mixed oxide of Pt/Rh ratio = 25/75 (doping), its peak x-ray diffraction intensity cannot be detected like the mixed oxide of Pt/Rh ratio = 0/100 (doping) and the mixed oxide with "no precious metal".

It can be said from the above that the sintering of Pt atoms progresses in the case of impregnation (post-supporting) but it is strongly suppressed in the case of doping.

Furthermore, the absence of a clear demonstration of a peak x-ray diffraction intensity in the case of doping proves the fact that the binding of Pt with the Ce-Zr-Nd oxide is stable, in other words, the fact that Pt is doped in the Ce-Zr-Nd oxide to hardly sinter Pt atoms.

### TEM observation results

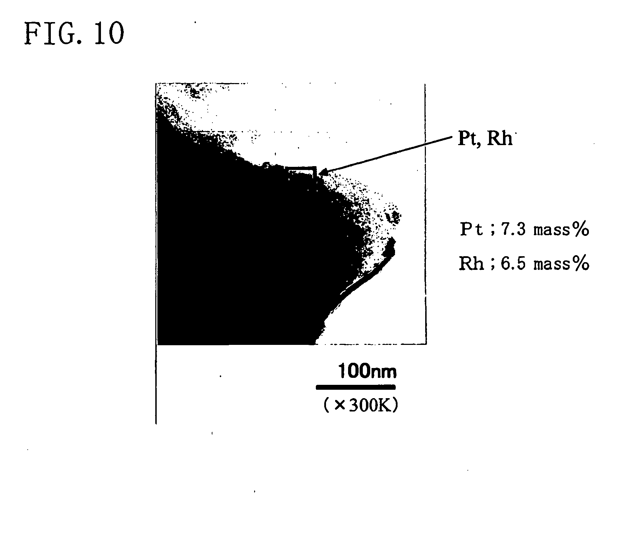

Figure **10** shows a STEM (Scanning Transmission Electron Microscope) photograph of a particle of a Rh- and Pt-doped mixed oxide of Pt/Rh ratio = 25/75 after heat-aging. As a result of a quantitative analysis of an area of the mixed oxide framed in the figure by EDX (Energy-Dispersive X-ray Diffraction), the amount of Pt was 7.3 mass % and the amount of Rh was 6.5 mass %.

More specifically, if the mixed oxide is produced simply by doping, Rh atoms and Pt atoms are basically not bound the ones to the others but dispersed independent the ones of the others, though Rh atoms may be incidentally bound to Pt atoms. Such a dispersed condition does not substantially change even if the time of calcination at around 500°C is extended.

In contrast, the existence of Rh and Pt atoms in the above framed small area after heat aging means that Pt atoms moved diffusively on the mixed oxide surface by heat aging and were bound to and captured by Rh atoms.

Furthermore, since any peak x-ray diffraction intensity of Pt is not detected in the mixed oxide of Pt/Rh ratio = 25/75 (doping) after heat aging as shown in Figure **9**, this means that Pt atoms did not form a large aggregate but were dispersed widely on the mixed oxide surface.

Therefore, the XRD analysis results (Figure **9**) and the EDX analysis results prove that at least some of Rh and Pt atoms in the mixed oxide were widely dispersed (highly dispersed) on the mixed oxide particle surface with the Rh atoms bound to the Pt atoms and that the Pt atoms were captured by the Rh atoms so as not to move diffusively.

### Oxygen storage property

### - Comparison between Rh-doped mixed oxide and Rh-post-supported mixed oxide -

Each of the Rh-doped mixed oxide according to the above embodiment (the Rh amount: 0.486 mass %) and the Rh-post-supported mixed oxide according to the prior art (the Rh amount: 0.486 mass %) was mixed with alumina and prepared into a granular sample. Each granular sample was aged (heated at 1000°C in a normal atmosphere for 24 hours) and then measured in terms of the rate of oxygen storage in an oxygen enriched atmosphere. The amount of each of the samples according to the embodiment and prior art is 0.05g, 0.016g of which is alumina.

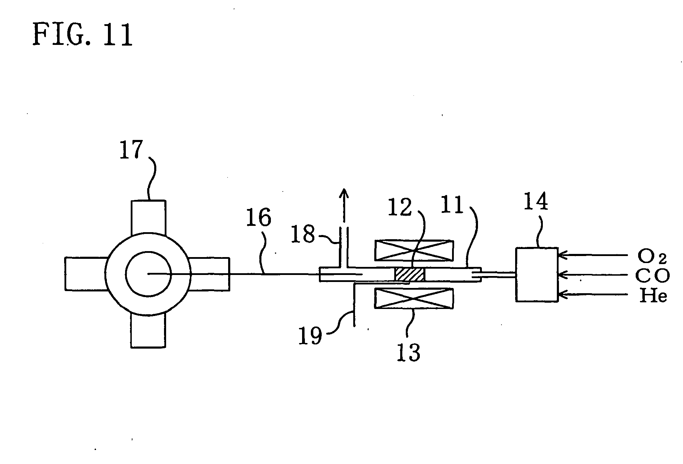

Figure **11** shows a measurement device for measuring the rate of oxygen storage. In this figure, the reference numeral **11** denotes a glass tube for holding a sample **12.** The sample **12** is kept heated at a predetermined temperature by a heater **13.** The glass tube **11** is connected, upstream of the sample **12,** with a pulse gas generator **14** for pulsatively supplying gases of O₂, CO and He individually. Downstream of the sample **12** in the glass tube **11,** the glass tube **11** is connected with a mass spectrometer **17** through a capillary column **16** and provided with an exhaust part **18.** A thermocouple **19** for temperature control is attached to the portion of the glass tube **11** in which a sample is to be held.

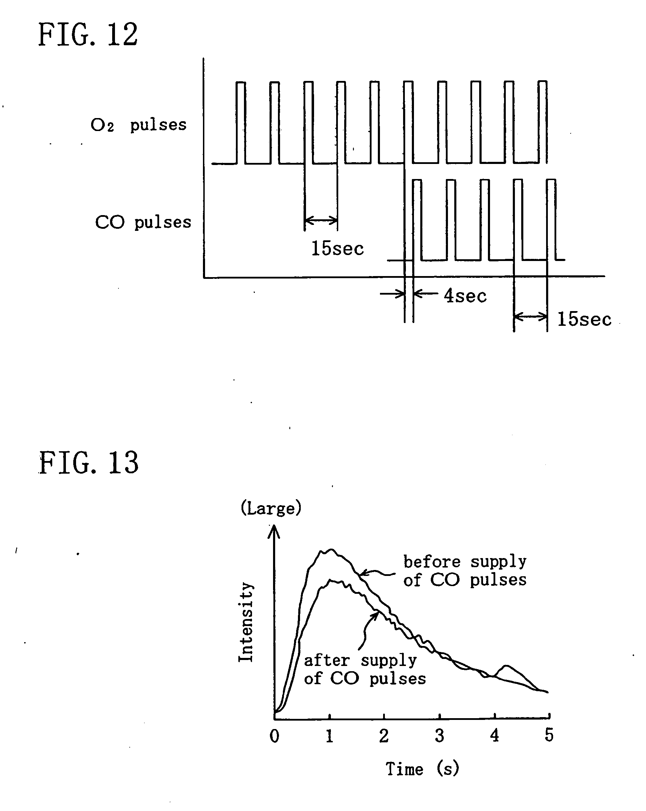

In measurement, the sample temperature in the glass tube **11** was kept at 500°C. Under this condition, as shown in Figure **12****,** a cycle of generation of a single O₂ pulse (a pulse width of 25ms) every 15 seconds was repeated several times and CO pulses (a pulse width of 50ms) were then generated each after a four second delay from each generation of subsequent O₂ pulses, while exhaust gas was constantly discharged from the exhaust part **18.** During the time, the mass spectrometer **17** was used to measure the change of the signal intensity of mass number 32 (the amount of O₂) with time in each cycle.

Thus, as shown in Figure **13****,** there were determined the change of the signal intensity of mass number 32 with time before supply of CO pulses (data when the change in the signal intensity become stable because of saturation of oxygen storage of the sample during the period of generation of O₂ pulses alone) and the change of the signal intensity of mass number 32 with time after supply of CO pulses (data when the change in the signal intensity become stable during the period of generation of CO pulses after generation of O₂ pulses alone. In this determination results, the reason for the difference between the signal intensities before and after supply of CO pulses is that the sample absorbed oxygen.

More specifically, the signal intensity before supply of CO pulses is based on the observation of amount of oxygen having passed through the sample in which oxygen storage is saturated. Therefore, it almost exactly reflects the amount of oxygen supplied by O₂ pulses. On the other hand, after supply of CO pulses, supplied CO pulses allow O₂ to be released from inside the sample and thereby changed into CO₂, and in turn the corresponding amount of oxygen to the released oxygen is absorbed into the sample. Therefore, the signal intensity after supply of CO pulses reflects the amount of oxygen obtained by subtracting the amount of absorbed oxygen from the amount of oxygen supplied by O₂ pulses. Hence, the amount of absorbed oxygen (i.e., the amount of oxygen storage) can be obtained by subtracting the signal intensity after supply of CO pulses from the signal intensity before supply of CO pulses. In practice, the sample releases previously absorbed oxygen while absorbing new oxygen. Therefore, the amount of oxygen storage described herein is an apparent amount of oxygen storage.

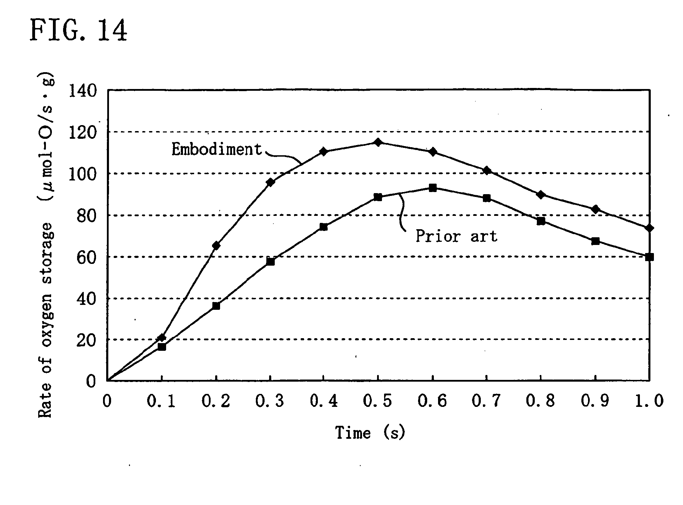

Figure **14** shows the changes with time of the rates of oxygen storage (numbers of moles of absorbed oxygen atoms per gram of sample per second) of the sample according to the embodiment (Rh-doped mixed oxide + alumina) and the sample according to the prior art (Rh-post-supported mixed oxide + alumina), which were determined by the mass spectrometer described above. As can be seen from the figure, for the sample according to the embodiment, the rate of oxygen storage is rapidly raised as compared with the sample according to the prior art, the peak rate is higher, and the amount of oxygen storage is larger. This proves that the mixed oxide according to the embodiment has a high OSC. Such a difference in OSC can be explained from the following reasons.

### - Estimated mechanism for oxygen storage -

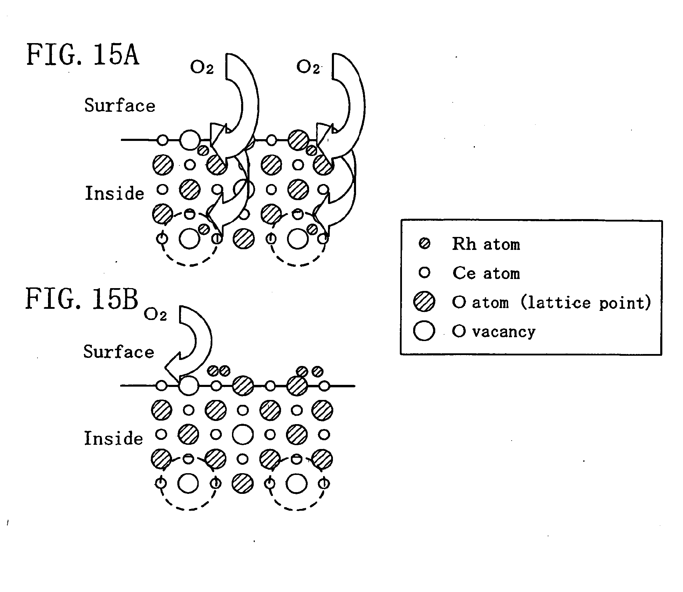

Figures **15A** and **15B** schematically show estimated mechanisms for oxygen storage of the Rh-doped mixed oxide according to the embodiment and the Rh-post-supported mixed oxide according to the prior art, respectively. In Figure **15**, neither Zr nor Nd atoms are given.

For the Rh-post-supported mixed oxide shown in Figure **15B****,** the following phenomenon can be explained. Oxygen (O₂) is adsorbed as oxygen ions on oxygen defect sites (O vacancies) existing inside of and in the vicinity of the surface of the mixed oxide, but cannot reach oxygen defect sites existing relatively deep inside of the mixed oxide. Therefore, the deep oxygen defect sites are hardly used for oxygen storage.

In contrast, the behavior of the Rh-doped mixed oxide shown in Figure **15A** is believed as follows. Oxygen (O₂) are attracted as oxygen ions to Rh atoms existing inside of the mixed oxide and instantaneously move via the Rh atoms to oxygen defect sites inside of the mixed oxide. Furthermore, since Rh atoms exist in dispersed form in the mixed oxide, the oxygen ions move from the mixed oxide surface to the oxygen defect sites deep inside of the mixed oxide via the plurality of Rh atoms while "hopping" from one atom to another. Therefore, with the Rh-doped mixed oxide, the rate of oxygen storage is quickly elevated on entry into oxygen enriched atmosphere and the peak value of the rate of oxygen storage is also elevated. Furthermore, the oxygen defect sites relatively deep inside of the oxygen storage material are used for oxygen storage. As a result, the amount of oxygen storage can be increased.

## Claims

1. A diesel particulate filter comprising: a filter body disposed in an exhaust passage of a diesel engine to trap particulate matter in an exhaust gas discharged from the engine; and a washcoat layer which is formed on wall surfaces of exhaust gas channels in the filter body and contains a catalytic precious metal for burning off the particulate matter by oxidation and mixed oxide particles including Ce and Zr, **characterised in that**
the catalytic precious metal comprises at least either Rh atoms placed at and/or between crystal lattice points of each said mixed oxide particle and existing inside of and on the surface of the mixed oxide particle, or Pt atoms placed at and/or between crystal lattice points of each said mixed oxide particle and existing on the surface of the mixed oxide particle.

2. A diesel particulate filter comprising: a filter body disposed in an exhaust passage of a diesel engine to trap particulate matter in an exhaust gas discharged from the engine; and a washcoat layer which is formed on wall surfaces of exhaust gas channels in the filter body and contains a catalytic precious metal for burning off the particulate matter by oxidation and mixed oxide particles including Ce and Zr, **characterised in that**
the catalytic precious metal comprises: Rh atoms placed at and/or between crystal lattice points of each said mixed oxide particle; and Pt atoms supported on the surface of each said mixed oxide particle at and/or between crystal lattice points of which the Rh atoms are placed.

## Patentansprüche

1. Dieselpartikelfilter, welcher umfasst: einen in einem Auslasskanal eines Dieselmotors angeordneten Filterkörper zum Zurückhalten von Partikelmaterial in einem von dem Motor ausgestoßenen Abgas; und eine Washcoat-Schicht, die auf Wandoberflächen von Abgaskanälen in dem Filterkörper ausgebildet ist und ein katalytisches Edelmetall zum Abbrennen des Partikelmaterials durch Oxidation und Ce und Zr umfassende Mischoxidpartikel enthält,
**dadurch gekennzeichnet, dass**
das katalytische Edelmetall mindestens entweder Rh-Atome, die an und/oder zwischen Kristallgitterpunkten jedes Mischoxidpartikels positioniert sind und in dem Mischoxidpartikel oder an der Oberfläche desselben vorhanden sind, oder Pt-Atome, die an und/oder zwischen Kristallgitterpunkten jedes Mischoxidpartikels positioniert sind und an der Oberfläche des Mischoxidpartikels vorhanden sind, umfasst.

2. Dieselpartikelfilter, welcher umfasst: einen in einem Auslasskanal eines Dieselmotors angeordneten Filterkörper zum Zurückhalten von Partikelmaterial in einem von dem Motor ausgestoßenen Abgas; und eine Washcoat-Schicht, die auf Wandoberflächen von Abgaskanälen in dem Filterkörper ausgebildet ist und ein katalytisches Edelmetall zum Abbrennen des Partikelmaterials durch Oxidation und Ce und Zr umfassende Mischoxidpartikel enthält, **dadurch gekennzeichnet, dass**
das katalytische Edelmetall umfasst: Rh-Atome, die an und/oder zwischen Kristallgitterpunkten jedes Mischoxidpartikels positioniert sind; und Pt-Atome, die an der Oberfläche jedes Mischoxidpartikels an und/oder zwischen Kristallgitterpunkten, von denen die Rh-Atome positioniert sind, gelagert sind.

## Revendications

1. Filtre à particules de moteur Diesel comprenant:
un corps de filtre disposé dans un passage d'échappement d'un moteur Diesel pour piéger des matières particulaires dans des gaz d'échappement évacués du moteur; et une couche d'encollage qui est formée sur les surfaces de paroi de canaux de gaz d'échappement dans le corps de filtre et qui contient un métal précieux catalytique pour la combustion des matières particulaires par oxydation et des particules d'oxyde mélangées incluant Ce et Zr, **caractérisé en ce que**
le métal précieux catalytique comprend au moins soit des atomes Rh placés à et/ou entre des points de réseau cristallin de chaque particule d'oxyde mélangé et existant à l'intérieur de et sur la surface de la particule d'oxyde mélangé, ou des atomes Pt placés à et/ou entre les points du réseau cristallin de chaque particule d'oxyde mélangé et existant sur la surface de la particule d'oxyde mélangé.

2. Filtre à particules de moteur Diesel comprenant:
un corps de filtre disposé dans un passage d'échappement d'un moteur Diesel pour piéger des matières particulaires dans les gaz d'échappement évacués par le moteur; et une couche d'encollage qui est formée sur les surfaces de paroi de canaux de gaz d'échappement dans le corps de filtre et qui contient un métal précieux catalytique pour la combustion des matières particulaires par oxydation et des particules d'oxyde mélangées incluant Ce et Zr, **caractérisé en ce que**
le métal précieux catalytique comprend: des atomes Rh placés à et/ou entre les points du réseau cristallin de chaque particule d'oxyde mélangé précité; et des atomes Pt supportés sur la surface de chaque particule d'oxyde mélangé précité à et/ou entre les points du réseau cristallin où les atomes Rh sont placés.
